# EUROPÄISCHE PATENTANMELDUNG

(11) **EP 0 665 118 A1**
(43) Veröffentlichungstag der Anmeldung: **02.08.1995**
(21) Anmeldenummer: 94118635.5
(22) Anmeldetag: 26.11.1994
(51) Int. Cl.: B41M 5/26, B41M 5/24, B44C 1/02, C08K 3/32, C08K 3/22

(54) **Mit Laserlicht beschriftbare Überzüge**

(30) Priorität: 27.01.1994 DE 4402329
(71) Anmelder: HÜLS AKTIENGESELLSCHAFT, D-45764 Marl (DE)
(72) Erfinder: Herkt-Maetzky, Christian, Dr., D-45772 Marl (DE); Lomölder, Rainer, Dr., D-48153 Münster (DE); Plogmann, Friedrich, D-44581 Castrop-Rauxel (DE); Stoye, Dieter, Dr., D-46286 Dorsten (DE)

(57) **Zusammenfassung**

Es besteht ein Bedarf, Überzüge so zu beschriften, daß die Schrift nicht entfernt werden kann bzw. nur unter Zerstörung des Überzuges entfernbar ist, und daß das Beschriften zu keiner ernsthaften Beeinträchtigung der Schutzfunktion des Überzuges führt.

Diese Möglichkeit wird durch Einarbeiten von basischem Kupferphosphat in das Überzugsmittel erreicht, wobei die Beschriftung des Überzuges mit Hilfe von Laserlicht bewirkt wird.

## Beschreibung

Gegenstand der Erfindung sind mit Laserlicht beschriftbare Überzüge.

Es ist üblich, Gegenstände mit einem Überzug zu versehen, um die Oberfläche gegen äußere Einflüsse, wie z. B. aus der Atmosphäre, gegen Chemikalien etc., zu schützen. Häufig besteht die Notwendigkeit, die mit einem Überzug versehenen Gegenstände zu beschriften. In der Regel erfolgt dies durch Bedrucken oder durch Aufkleben eines Etiketts. Beide Verfahrensweisen haben den Nachteil, daß die Information z. B. zufällig oder mutwillig entfernt werden kann bzw. entfernt wird.

Es ist daher versucht worden, mit Hilfe von Laserlicht eine Beschriftung direkt auf die Oberfläche des Überzuges aufzubringen. In der Regel hat diese Methode zur Zerstörung der sehr dünnen Schicht des Überzuges an der Stelle geführt, an der die Beschriftung angebracht ist.

Aufgabe der vorliegenden Erfindung war es, die genannten Nachteile des Standes der Technik zu vermeiden.

Es wurde nun gefunden, daß die geschilderten Probleme dadurch überwunden werden können, indem basisches Kupferphosphat in den Überzügen verwendet wird.

Als basisches Kupferphosphat wird erfindungsgemäß ein Produkt eingesetzt, das etwa die Zusammensetzung Cu₃(PO₄)₂ · Cu(OH)₂ aufweist. Ein wesentliches Merkmal des basischen Kupferphosphats muß es sein, daß seine Teilchengröße deutlich unter der Schichtdicke eines Überzuges liegt. Da in der Überzugstechnologie Schichtstärken bis hinunter zu 10 µm möglich sind, ist es erforderlich, daß der Teilchendurchmesser des erfindungsgemäß verwendeten basischen Kupferphosphats vorzugsweise < 10 µm, insbesondere 1 bis 5 µm, beträgt.

Das basische Kupferphosphat selbst sowie seine Herstellung sind aus dem Stand der Technik bekannt (EP-OS 143 933).

Das basische Kupferphosphat ist zu 0,5 bis 15 Gew.-%, vorzugsweise zu 1 bis 10 Gew.-%, jeweils bezogen auf den Bindemittelgehalt, in den Überzügen enthalten.

Als Bindemittel für die mit Laserlicht beschriftbaren Überzüge kommen alle in der Überzugsmitteltechnologie bekannten Stoffe infrage. Es ist unerheblich, ob das Bindemittel vor dem Aufbringen gelöst ist oder ob es in flüssiger oder fester Form (Pulverlacke) vorliegt. Für die Erfindung ist es ebenfalls gleichgültig, ob die Überzugsmittel chemisch oder physikalisch trocknen. Bezüglich der Beschriftbarkeit spielen die in der Überzugsmitteltechnologie üblichen Hilfs- und Zusatzstoffe keine Rolle. Auch die Auftragsmethode für das Überzugsmittel beschränkt nicht die Erfindung.

Hinsichtlich der in der Überzugsmitteltechnologie üblichen Stoffe für Bindemittel, Hilfsmittel, Auftragsverfahren wird u. a. auf H. Kittel, **Lehrbuch der Lacke und Beschichtungen** - Verlag W. A. Colomb (1976) verwiesen.

Gleichfalls ohne Einfluß auf den Gegenstand der Erfindung ist das eingesetzte Substrat, welches mit einem Überzug versehen ist.

Als Laser können u. a. Infrarot-Laser (ohne Frequenzverdoppelung) oder Ultraviolett-Laser eingesetzt werden. Als Beispiele seien Nd-YAG-Laser (Wellenlänge: 1 064 nm) oder Eximer-Laser (Wellenlänge: 308 nm bzw. 351 nm) genannt.

Das erfindungsgemäß verwendete basische Kupferphophat weist nachstehende Vorteile auf:
- Es ist nahezu farblos. Es können helle Überzüge hergestellt bzw. der Überzug kann beliebig eingefärbt werden.
- Die anwendungstechnischen Eigenschaften des Überzuges werden nicht beeinflußt.
- Das basische Kupferphosphat hat im infraroten und im ultravioletten Spektralbereich ein großes Absorptionsvermögen und ist demzufolge gegen entsprechendes Laserlicht hoch empfindlich.
- Die Beschriftung weist ein hohes Kontrastverhältnis auf. Zur Steigerung des Kontrastes sind keine weiteren Hilfsstoffe, wie z. B. Aufheller, erforderlich.
- Die erhaltenen Schriftzeichen haben eine hervorragende Lichtbeständigkeit.
- Die Schriftzeichen können nicht zufällig oder mutwillig entfernt werden.
- Nach Belichtung mit einem Laser, ist keine Beschädigung des Überzuges zu erkennen.

Das **Kontrastverhältnis K** wird nach bekanntem Verfahren [Prüfgrundsätze der Verwaltungs-Berufsgenossenschaft, GS-VW-SG 7 (1988) - Abschn. 5.6.2.8] bestimmt. Für dunkle Zeichen auf hellem Grund ist es definiert als Quotient von Hintergrundleuchtdichte zu Zeichenleuchtdichte.

Mit Buchstaben gekennzeichnete Versuche sind nicht erfindungsgemäß.

### Beispiele

Zur Beschriftung der Überzüge wird ein Nd-YAG-Laser (Wellenlänge: 1 064 nm) im Pulsbetrieb (Pulsfrequenz: 3 KHz) eingesetzt. Die Beleuchtungsstärke in der Beschriftungsebene beträgt etwa 100 J · cm⁻². Es wird eine Vorschubgeschwindigkeit des Laserstrahls von 200 mm · s⁻¹ gewählt.

### Versuch 1

Es wird ein roter 2-Komponenten Polyurethanlack mit einem Gehalt an basischem Kupferphosphat von 2 Gew.-% - bezogen auf den Bindemittelgehalt - hergestellt und belichtet.

### Stammpaste:

240,83 g Hydroxylgruppenhaltiges Acrylatharz (Setalux® C 1187 - Akzo Resins)
17,56 g Irgazinrot® A2 BN (Ciba Geigy)
4,38 g basisches Kupferphosphat
3,62 g Butylacetat
3,61 g Xylol
5,87 g handelsübliches Dispergiermittel (Disperbyk® 170 - Byk-Chemie)
Die Dispergierung erfolgt innerhalb von 30 min. in einem Red Devil-Dispergieraggregat.

### Überzugsmittel:

61,30 Gew.-% Stammpaste
23,81 Gew.-% cycloaliphatisches Polyisocyanatharz (VESTANAT® T 1890 L - Hüls AG)
0,82 Gew.-% Dibutylzinndilaurat (1 Gew.-%ig in Methoxypropylacetat)
0,90 Gew.-% Ca-Octoat-Lösung, 4 Gew.-% Ca (Fa. Borchers)
3,00 Gew.-% Methoxybutylacetat
2,00 Gew.-% Isophoron
8,17 Gew.-% Butylacetat/Xylol-Gemisch (Gewichtsverhältnis: 1 : 1)
Auslaufzeit des Überzugsmittels nach Vermischen der Komponenten: 25 sec (DIN-4-Becher)
Substrat: chromatiertes Aluminium (Alodine® 1200 - Fa. Collardin, Köln)
Härtung: 12 min/140 °C im Umluftofen
Schichtstärke: 25 bis 30 µm

### Versuch A

Es wird das gleiche Überzugsmittel wie in Versuch 1 verwendet - jedoch ohne basisches Kupferphosphat.

### Überzugsmittel:

60,00 Gew.-% Stammpaste
23,67 Gew.-% cycloaliphatisches Polyisocyanatharz (VESTANAT® T 1890 L - Hüls AG)
0,82 Gew.-% Dibutylzinndilaurat (1 Gew.-%ig in Methoxypropylacetat)
0,90 Gew.-% Ca-Octoat-Lösung, 4 Gew.-% Ca (Fa. Borchers)
3,00 Gew.-% Methoxybutylacetat
2,00 Gew.-% Isophoron
9,61 Gew.-% Butylacetat/Xylol-Gemisch (Gewichtsverhältnis: 1 : 1)
Auslaufzeit des Überzugsmittels nach Vermischen der Komponenten: 25 sec (DIN-4-Becher)
Substrat: chromatiertes Aluminium
Härtung: 12 min/140 °C im Umluftofen
Schichtstärke: 25 bis 30 µm

| Ergebnisse der Beschriftungsversuche: | | |
|---|---|---|
| | Stromstärke des Lasers 13 A | Stromstärke des Lasers 12,5 A |
| Versuch 1 | sehr gute Beschriftbarkeit | sehr gute Beschriftbarkeit |
| Versuch A | Zerstörung des Überzuges | keine Beschriftbarkeit |

### Versuch 2

Es wird ein Überzugsmittel analog Versuch 1 hergestellt mit der Ausnahme, daß anstelle des roten Farbstoffs Heliogenblau® L 6975 F (BASF) eingesetzt wird.

Auslaufzeit des Überzugsmittels nach Vermischen der Komponenten: 29 sec (DIN-4-Becher)
Substrat: chromatisches Aluminium
Härtung: 12 min/140 °C im Umluftofen
Schichtstärke: 25 bis 30 µm

### Versuch B

Es wird das gleiche Überzugsmittel wie in Versuch 2 eingesetzt mit der Ausnahme, daß es kein basisches Kupferphosphat enthält.

Auslaufzeit des Überzugsmittels nach Vermischen der Komponenten: 25 sec (DIN-4-Becher)
Substrat: chromatiertes Aluminium
Härtung: 12 min/140 °C im Umluftofen
Schichtstärke: 25 bis 30 µm

| Ergebnisse der Beschriftungsversuche: | | |
|---|---|---|
| | Stromstärke des Lasers 13 A | Stromstärke des Lasers 12,5 A |
| Versuch 2 | sehr gute Beschriftbarkeit | sehr gute Beschriftbarkeit |
| Versuch B | schwache Beschriftbarkeit vollständige Ablösung des Überzuges | keine Beschriftbarkeit |

### Versuch 3

Es wird ein grauer 2-Komponenten Polyurethanlack mit einem Gehalt an basischen Kupferphosphat von 10 Gew.-% - bezogen auf den Bindemittelgehalt - hergestellt und belichtet.

### Stammpaste:

49,85 Gew.-% Hydroxylgruppenhaltiges Polyacrylatharz (Setalux® C 1187 - Akzo Resins)
33,83 Gew.-% TiO₂ (Kronos 2057)
11,77 Gew.-% Butylacetat/Xylol-Gemisch (Gewichtsverhältnis: 1 : 1)
0,04 Gew.-% Spezialschwarz 4 (Degussa)
4,51 Gew.-% basisches Kupferphosphat
Die Dispergierung erfolgt innerhalb von 30 min in einem Red Devil-Dispergieraggregat.

### Überzugsmittel:

74,80 Gew.-% Stammpaste
0,57 Gew.-% Dibutylzinndilaurat (1 Gew.-%ig in Methoxypropylacetat)
0,67 Gew.-% Ca-Octoat (4 Gew.-% Ca, Fa. Borchers)
3,10 Gew.-% Methoxybutylacetat
2,28 Gew.-% Isophoron
2,00 Gew.-% handelsübliches Verlaufmittel, 10 Gew.-%ig (Byk® 331 - Byk-Chemie)
16,58 Gew.-% cycloaliphatisches Polyisocyanatharz (VESTANAT® T 1890 L - Hüls AG)
Auslaufzeit des Überzugsmittels nach Vermischen der Komponenten: 22 sec (DIN-4-Becher)
Substrat: chromatiertes Aluminium
Härtung: 12 min/140 °C im Umluftofen
Schichtstärke: 25 bis 30 µm

### Versuch C

Es wird das gleiche Überzugsmittel wie in Versuch 3 eingesetzt mit der Ausnahme, daß es kein basisches Kupferphosphat enthält.

Auslaufzeit des Überzugsmittels nach Vermischen der Komponenten: 23 sec (Din-4-Becher)
Substrat: chromatiertes Aluminium
Härtung: 12 min/140 °C im Umluftofen
Schichtstärke: 25 bis 30 µm
Es wird das Kontrastverhältnis bestimmt.

| | Kontrastverhältnis K |
|---|---|
| Versuch 3 | 1,7 ± 0,1 |
| Versuch C | 1,4 ± 0,1 |

## Patentansprüche

1. Verwendung von basischem Kupferphosphat für mit Laserlicht beschriftbare Überzüge.

2. Verwendung gemäß Anspruch 1,
dadurch gekennzeichnet,
daß die Überzüge 0,5 bis 15 Gew.-% - bezogen auf das Bindemittel - basisches Kupferphosphat enthalten.

3. Verwendung gemäß Anspruch 1,
dadurch gekennzeichnet,
daß die Überzüge 1 bis 10 Gew.-% - bezogen auf das Bindemittel - basisches Kupferphosphat enthalten.

4. Verwendung gemäß den Ansprüchen 1 bis 3,
dadurch gekennzeichnet,
daß ein basisches Kupferphosphat mit einer Teilchengröße < 10 µm eingesetzt wird.
